# EUROPÄISCHE PATENTSCHRIFT

(11) **EP 1 388 995 B1**
(45) Veröffentlichungstag und Bekanntmachung des Hinweises auf die Patenterteilung: **05.12.2012**
(21) Anmeldenummer: 03017853.7
(22) Anmeldetag: 05.08.2003
(51) Int. Cl.: H04L 29/06, H04M 3/38, H04M 3/42, H04M 7/00, H04L 29/08

(54) **Zuordnung eines voreingestellten Minimumserviceprofils für Endgeräte einer IP-PBX**
Assignment of a default minimum service profile for terminals of an IP-PBX
Attribution d'un profil de service minimum pour terminaux d'un autocommutateur privé type IP (IP-PBX)

(30) Priorität: 05.08.2002 DE 10235833
(43) Veröffentlichungstag der Anmeldung: 11.02.2004
(73) Patentinhaber: Tenovis GmbH & Co. KG, 60326 Frankfurt (DE)
(72) Erfinder: Diehl, Rolf, 61279 Grävenwiesbach/Hundstadt (DE); Hemmerich, Thomas, 63477 Maintal (DE); Niebuhr, Axel, 65719 Hofheim-Lorsbach (DE); Przybyszewski, Marek, 46045 Oberhausen (DE); Vogel, Peter, 61194 Niddatal (DE)
(74) Vertreter: Tergau & Walkenhorst

(56) Entgegenhaltungen:
- EP-A- 1 089 530
- WO-A-00/35176
- US-A1- 2002 141 390
- SCHULZRINNE COLUMBIA U: "Providing Emergency Call Services for SIP-based Internet Telephony; draft-schulzrinne-sip-911-00.txt;" IETF STANDARD-WORKING-DRAFT, INTERNET ENGINEERING TASK FORCE, IETF, CH, 13. Juli 2000 (2000-07-13), XP015035059 ISSN: 0000-0004
- ANONYMOUS: "ITU-T H.323, Series H: Audiovisual and multimedia systems, infrastructure of audiovisual services- Systems and terminal equipment for audiovisual services, packet-based multimedia communications system, ANNEX F, partially"[Online] November 2000 (2000-11), Seiten 181-191, XP002394453 INTERNET PUBLICATION Gefunden im Internet: URL:http://mirror.itu.int/dms/pages/itu-t/ rec/h/T-REC-H.323-200011-S.html> [gefunden am 2006-08-10]

## Beschreibung

Die Erfindung betrifft ein Betriebsverfahren für eine Telekommunikationsanlage gemäß dem Oberbegriff des Anspruchs 1 sowie eine TK-Anlage zur Anwendung des Verfahrens. Ein derartiges Betriebsverfahren sowie eine derartige TK-Anlage sind beispielsweise aus der EP-A-1089530 bekannt.

In modernen Unternehmen wird die Büroorganisation immer flexibler gestaltet. Nicht jeder Mitarbeiter hat mehr unbedingt einen festen Arbeitsplatz, an dem er tagtäglich seine Arbeit verrichtet und auf die TK-Anlage der Firma zugreift. Vielmehr kann einem Mitarbeiter projektbezogen jeweils ein Arbeitsplatz zugewiesen werden, der sich in der unmittelbaren Nähe zu den Arbeitsplätzen der anderen an diesen Projekt beteiligten Kollegen befindet.

Damit der Mitarbeiter an den wechselnden Einsatzorten jedoch seine gewohnte Arbeitsumgebung vorfindet, sind prinzipiell zwei unterschiedliche Konzepte möglich. Zum einen kann er mit seinem Arbeitsgerät umziehen, darunter sein Telefon mit eingespeicherten Kurzwahltasten oder sein Rechnersystem mit seinen gespeicherten Daten. Bei der alternativen Lösung findet der Mitarbeiter an dem neuen Arbeitsplatz die entsprechenden Endgeräte vor, die ihm dort einen Zugriff auf seine persönlichen Daten ermöglichen.

In TK-Anlagen, insbesondere in Netzen, die das Internet-Protokoll verwenden und als IP-Netze bezeichnet werden, muss sich der Mitarbeiter bzw. Benutzer üblicherweise an einem an diesem Netz angeschlossenen IP-Endgerät mittels einer Anmelde-Prozedur anmelden.

Die angeschlossenen IP-Endgeräte müssen verwaltet werden. Den IP-Telefonen (Hardware) ist eine IP-Adresse zugeordnet, aber keine Telefonnummer. Die Telefonnummer ist in IP-Telefonie-Netzen bzw. VoIP-Netzen einem menschlichen Benutzer zugeordnet. Daher kann mit IP-Telefonen nach dem Stand der Technik nur telefoniert werden, wenn ein menschlicher Benutzer angemeldet ist. Dieser kann sich innerhalb des IP-Netzwerkes an jedem IP-Telefon unter seiner Telefonnummer anmelden. Das ist ein wesentlicher Vorteil der IP-Telefonie-Netze.

Wenn sich nun ein Benutzer an einem IP-Telefon anmeldet, so gibt der Benutzer an dem Endgerät seine persönliche Benutzerkennung ein. Dies kann beispielsweise ein Benutzername, eine Email-Adresse oder auch eine Durchwahlnummer sein. Die zu verwendende Benutzerkennung ist abhängig davon, an was für einem Endgerät der Benutzer sich anmeldet. Die Netz- bzw. Systemsicherheit kann gesteigert werden, wenn zusätzlich die Eingabe eines Passwortes erforderlich ist.

Nach Eingabe der Benutzerdaten und Übermittlung derselben zusammen mit der IP-Adresse des IP-Telefons an einem Vermittlungs- bzw. Netzknoten (Gatekeeper), werden die eingegebenen Daten, beispielsweise Benutzerkennung und Passwort, dort auf ihre Gültigkeit überprüft. Anschließend wird - bei einer gültigen Anmeldung - dem Benutzer sein persönliches und spezifisches Benutzerprofil an dem Endgerät bereit gestellt. Der Vermittlungsknoten verwaltet die Benutzerprofile, die bei ihm abgespeichert sind. Das spezifische Benutzerprofil eröffnet dem Mitarbeiter in Abhängigkeit der von einem Systemadministrator vergebenen Berechtigungen unterschiedliche Funktionen des Endgerätes. Nun sind IP-Telefon und Benutzer über IP-Adresse und Rufnummer zugeordnet und im Netzwerk angemeldet.

Auf diese Weise kann sich der Mitarbeiter an unterschiedlichen Endgeräten anmelden, die an dem Kommunikationsnetz angeschlossen sind, und es steht ihm an jedem dieser Endgeräte sein "persönliches" Benutzerprofil zur Verfügung. So können beispielsweise Emails und/oder Telefongespräche jeweils an das Endgerät weitergeleitet werden, an dem der Benutzer sich angemeldet hat, unabhängig davon, an welchem Arbeitsplatz er sich gerade befindet. Ein von außen kommender Telefonanruf an die persönliche Rufnummer des Mitarbeiters gelangt ebenfalls an das Endgerät, an dem der Mitarbeiter angemeldet ist, ohne dass der Anrufer weiß, an welchem Arbeitsplatz der Mitarbeiter sich gerade befindet.

Weiterhin ist denkbar, das der Mitarbeiter sich von einem Heimarbeitsplatz bzw. Home-Office, einem Büro in einer Niederlassung der Firma oder jedem anderen Ort an der TK-Anlage bzw. dem IP-Netz anmeldet. Er ist somit nach seiner Anmeldung ortsunabhängig über das Kommunikationsnetz erreichbar bzw. kann dieses nutzen.

Bei dem vorstehend beschriebenen Kommunikationssystem ist es allerdings von Nachteil, dass nur nach einer Anmeldung und Bereitstellung eines Benutzerprofils das IP-Endgerät bedient werden kann. So ist es beispielsweise einer Person, die keine Benutzerkennung für dieses System besitzt oder nicht die Zeit für die Durchführung der Anmeldeprozedur hat, nicht möglich, in einem Notfall mit dem Endgerät Hilfe herbeizurufen.

Hiervon ist eine Eigenschaft einiger IP-Telefone nach dem Stand der Technik zu unterscheiden, nämlich dass das bereits angemeldete IP-Telefon sich nach einem Stromausfall selbsttätig unter dem letzten angemeldeten Benutzer wieder anmeldet bzw. die Anmeldung weiterführt.

Die DE 199 46 444 beschreibt ein Verfahren zum Ermitteln von Verbindungsgebühren für eine Mehrzahl von Teilnehmern, die einen gemeinsamen Telefonanschluss nutzen. Herkömmlich ist es jedoch nicht möglich, die Teilnehmer, d.h. menschlichen Benutzer, zu unterscheiden. Zur Lösung des Problems wird in der DE 199 46 444 vorgeschlagen, beim Initiieren eines Verbindungsaufbaus zu einer Gegenstelle zunächst eine Verbindung zu einem Sprachsystem aufzubauen, an das der Teilnehmer eine gesprochene Benutzerkennung übermitteln muss. Nach Zuordnung der Benutzerkennung zu einer Referenzkennung wird der Anschluss zum Verbindungsaufbau mit der Gegenstelle freigegeben. Bei Eingabe von Rufnummern aus einer vorgebbaren Rufnummerngruppe wird ohne eine Überprüfung einer Benutzerkennung eine Verbindung zu der gewählten Nummer hergestellt.

Das dem in der DE 199 46 444 geschilderten Verfahren zugrundeliegende Telekommunikationsnetz kann ein Festnetz oder ein Mobilfunknetz sein, jedenfalls aber ein klassisches Netz. Eine Lösung des in der DE 199 46 444 diskutierten Problems für den Fall der IP-Telefonie mit seiner oben diskutierten, speziellen Problematik ist nicht offenbart.

Aufgabe der vorliegenden Erfindung ist es daher, ein verbessertes Betriebsverfahren für eine TK-Anlage anzugeben, welches eine erweiterte Nutzbarkeit bietet, sowie eine entsprechende TK-Anlage zur Anwendung des erfindungsgemässen Verfahrens bereitzustellen.

Diese Aufgabe wird verfahrensseitig durch die Merkmale des Anspruchs 1 und anlagenseitig durch die Merkmale des Anspruchs 5 gelöst.

Eine wesentliche Idee der Erfindung ist, dass auch wenn kein Benutzer an einem Endgerät der TK-Anlage "angemeldet" ist, eine Verwendung im Rahmen eines vordefinierten, ein Minimum von an jedem IP-Endgerät bereitzustellenden Funktionen umfassenden "Minimalbenutzerprofils oder Minimalprofil" möglich ist. Das bedeutet, dass auch im paketvermittelten Bereich ein IP-Endgerät unabhängig von einem bestimmten Benutzer quasi als Gerät angemeldet wird wie im leitungsvermittelten Bereich, unter Nutzung eines Default-Benutzerprofils. Das Minimalprofil umfasst dabei ausgewählte Verbindungen und/oder ausgewählte Leistungsmerkmale und ist in einem zusätzlichen Speicherbereich eines Profilspeichers abgelegt, in dem die Benutzerprofile der zugelassenen Benutzer abgespeichert sind.

Erfolgt nun eine Verwendung des Endgerätes im paket-vermittelten Bereich nicht durch einen angemeldeten Benutzer, wird der Ruf von einem Vermittlungsknoten nicht abgewiesen, sondern in dem vorbestimmten, minimalen Umfang zugelassen. Etwa ein Notruf wird folglich weitervermittelt. Dadurch kann das Endgerät in diesem minimalen Umfang von jeder Person verwendet werden, die entweder nicht mit der eigenen Benutzerkennung angemeldet ist oder keine eigene Benutzerkennung für diese TK-Anlage besitzt. Durch die Zulassung nur eines minimalen Umfanges an Berechtigungen wird das System aber insgesamt nicht wesentlich unsicherer oder anfälliger für unbefugte Benutzung.

In vorteilhafter Weise erfolgt die Bereitstellung des Minimalprofils automatisch, wenn zwischen dem Endgerät und dem Vermittlungsknoten eine Verbindung besteht. Dadurch ist eine Eingabe über eine Eingabeeinrichtung, beispielsweise die Tastatur eines Rechners oder das Tastenfeld eines Telefons, nicht erforderlich. Das Endgerät steht somit jeder Person zur zugelassenen, minimalen Verwendung zur Verfügung.

Bei einer vorteilhaften Ausführungsform des erfindungsgemäßen Betriebsverfahrens wird an das Endgerät eine Nachricht gesendet, dass die angeforderte Verbindung und/oder das angeforderte Leistungsmerkmal nicht her- bzw. bereitgestellt wird, wenn diese nicht von dem Benutzerprofil bzw. Minimalprofil umfasst ist.

In einer bevorzugten Ausführungsform des erfindungsgemäßen Betriebsverfahrens wird das Minimalprofil bzw. werden die Berechtigungen der minimalen Bedienfunktionalität mittels eines oder mehrerer Administrationsprogramme im Vermittlungsknoten eingerichtet. Dadurch ist es einem Systemadministrator möglich, von einer einzigen Stelle, beispielsweise einem Bedienterminal des Vermittlungsknotens, die Berechtigungen des Minimalprofils zu verwalten.

Vorteilhafte Aspekte des erfindungsgemäßen Kommunikationssystems ergeben sich weitgehend aus der vorstehenden Beschreibung der vorteilhaften Aspekte des erfindungsgemäßen Verfahrens.

In einer bevorzugten Ausführungsform der erfindungsgemäßen TK-Anlage weist der Vermittlungsknoten einen Speicher und eine Verifiziervorrichtung auf. In dem Speicher ist eine Zuordnung zwischen den Benutzerkennungen und den Endgeräten abgespeichert, an denen Benutzer gültig abgespeichert sind. Die Verifiziereinrichtung kann dann anhand der Zuordnung aus dem Speicher eine empfangene Signalisierung von einem Endgerät einer Benutzerkennung zuordnen, so dass das entsprechende Benutzerprofil im Profilspeicher adressierbar ist. Erfolgt die Signalisierung von einem Endgerät, an dem kein Benutzer gültig angemeldet ist, wird der Signalisierung keine Benutzerkennung der angemeldeten Benutzer zugeordnet. Diese Signalisierung wird dann unter Bezug auf das Minimalprofil weiterverarbeitet.

Bevorzugt weist der Vermittlungsknoten der erfindungsgemäßen TK-Anlage einen Vergleicher auf. Dieser überprüft anhand des adressierten Benutzerprofils aus dem Profilspeicher, ob die empfangene Signalisierung ein Ziel aufweist, das von diesem Benutzerprofil umfasst wird.

Bevorzugt unterstützt die erfindungsgemäße TK-Anlage Übertragungs- und Transportprotokolle des H.323-Standards, der in IP-basierenden Netzen zur Sprachübertragung regelmäßig verwendet wird. Dadurch ist ein komplikationsloser Betrieb mit unterschiedlichen Applikationen innerhalb des Netzes gewährleistet.

Weitere vorteilhafte Ausführungsformen ergeben sich aus den Unteransprüchen.

Weitere Vorteile und Zweckmäßigkeiten ergeben sich aus der nachfolgenden Beschreibung in Verbindung mit den Zeichnungen. Hierbei zeigen:
- Fig. 1: schematisch den Aufbau einer gattungsgemäßen TK-Anlage,
- Fig. 2: ein schematisches Diagramm zur Zuordnung von Benutzerprofilen mit Endgerät-Adressen und
- Fig. 3: ein schematisches Funktionsblockschaltbild für ein erfindungsgemäßes Betriebsverfahren.

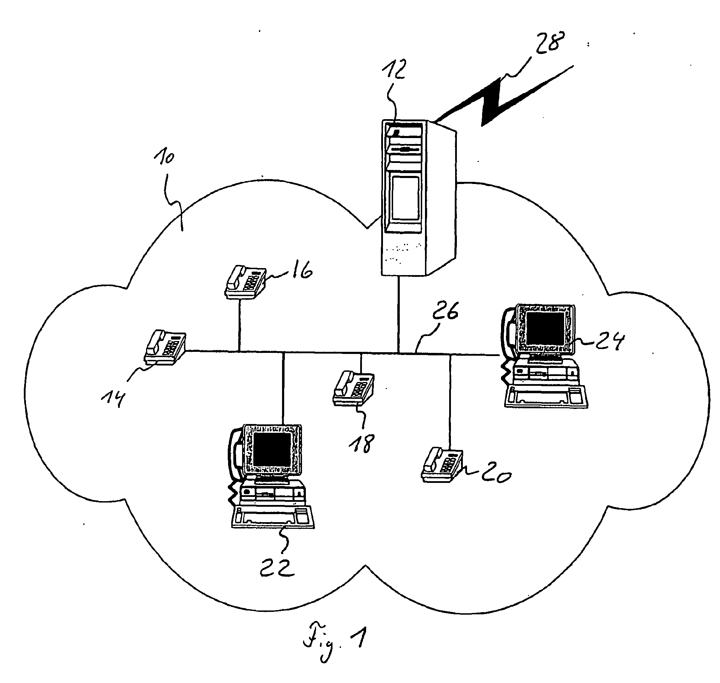

Fig. 1 zeigt eine gattungsgemäße TK-Anlage 10, die beispielsweise ein firmeninternes Netzwerk oder ein LAN (local area network) sein kann. In dem dargestellten Beispiel ist das Firmennetz sehr vereinfacht gezeigt. Es ist offensichtlich, das deutlich mehr Endgeräte bzw. Vermittlungsknoten an ein derartiges Firmennetz angeschlossen sein können.

Die dargestellte TK-Anlage 10 weist einen Vermittlungsknoten 12 und mehrere Endgeräte 14, 16, 18, 20, 22, 24 auf. Diese können beispielsweise auf unterschiedliche Arbeitsplätze in einem Unternehmensgebäude verteilt angeordnet sein, wobei an einem Arbeitsplatz auch mehrere Endgeräte angeordnet sein können. Beispielsweise kann einem Arbeitsplatz ein Telekommunikations-Endgerät 20 und ein Rechnersystem 24 zugeordnet sein. Weitere Endgeräte, beispielsweise ein Telefaxgerät (nicht dargestellt) sind ebenso denkbar. Der Vermittlungsknoten 12 übernimmt die Vermittlungsfunktion (Gatekeeper) der TK-Anlage 10 für den VoIP-Bereich.

Der Vermittlungsknoten 12 ist mit den Endgeräten 14, 16, 18, 20, 22, 24 über eine Leitung 26, beispielsweise über Ethernet oder jedes andere vergleichbares Netzprotokoll, verbunden. Die Verbindung zwischen den Endgeräten 14, 16, 18, 20, 22, 24 und dem Vermittlungsknoten 12 muss aber nicht durch eine Leitung realisiert sein, auch eine drahtlose Anbindung, beispielsweise mittels Funk- oder Infrarotübertragung, ist möglich. Der Vermittlungsknoten 12 kann weiterhin mit anderen Netzen bzw. TK-Anlagen (nicht dargestellt) verbunden sein. Diese Möglichkeit der Fernverbindung ist durch die gezackte Verbindungslinie 28 angedeutet.

Für die Kommunikation zwischen einem Endgerät und dem Vermittlungsknoten wird ein RAS-Protokoll verwendet. RAS steht hier für Registration, Admission und Status. Das RAS-Protokoll ist ein Bestandteil von H.323 und dient der Kommunikation zwischen einem Vermittlungsknoten (Gatekeeper) und einem Endgerät, wobei das Protokoll die Registrierung, die Kontrolle und die Abfrage von Statusinformationen übernimmt.

Der H.323-Standard ist eine Empfehlung der ITU (International Telecommunication Union) einer Unterorganisation der Vereinten Nationen (UN), in der Regierungen und der private Telekommunikationssektor den Aufbau und den Betrieb von Telekommunikationsnetzen und -diensten koordinieren. Der H.323-Standard ist eine Technologie für die Übertragung von Echtzeit-Audio, -Video und -Daten über paketvermittelnde Netzwerke. Er spezifiziert Komponenten, Protokolle und Prozeduren, die eine Multimedia-Kommunikation über paketvermittelnde Netze bereitstellen.

An die TK-Anlage 10 sind im Beispiel verschiedenartige Endgeräte angeschlossen. Zum einen sind Telekommunikationsendgeräte bzw. Telefone 14, 16, 18, 20, zum anderen sind Rechnersysteme 22 und 24 in die TK-Anlage10 integriert. In dem dargestellten Beispiel weisen die Rechnersysteme 22 und 24 ebenfalls die Möglichkeit zur Telekommunikation mittels VoIP (Voice over IP) auf. Die Rechnersysteme 22 und 24 sind daher mit Spracherfassung- und -wiedergabeeinrichtungen versehen. Die Telefone 14, 16, 18, 20 können jeweils ein Display bzw. Anzeigenfeld aufweisen, so dass an ihnen auch Textmeldungen, beispielsweise SMS (Short Message Service) oder e-Mails angezeigt werden können. Die Erzeugung entsprechender Textmeldungen erfolgt dabei über das Tastenfeld der Telefone 14, 16, 18, 20.

Ein Benutzer kann sich an einem ihm zugewiesenen Arbeitsplatz an dem dort installierten Endgerät, beispielsweise dem Telefon 20, anmelden. Hierzu gibt er an dem Tastaturfeld des Telefons 20 nach einer Eröffnung der Anmeldeprozedur, beispielsweise durch Betätigung einer bestimmten Funktionstaste, seine persönliche Rufnummer ein. Damit kein anderer Benutzer unbefugt sich die entsprechenden Telefonate an ein anderes Endgerät leiten lassen kann, ist ferner eine Eingabe eines Authentisierungscodes erforderlich. Bei dem Telefon 20 mit einem üblichen, numerischen Tastaturfeld ist dies eine PIN, die vom Systemadministrator vergeben und verwaltet wird.

Die eingegebenen Nummern werden vom Telefon 20 an den Vermittlungsknoten 12 weitergeleitet und dort auf ihre Gültigkeit überprüft. Nach Überprüfung der Gültigkeit der Anmeldung steht dem befugten Benutzer das Endgerät bzw. das Telefon 20 mit seinen im Benutzerprofil festgelegten Berechtigungen zur Nutzung zur Verfügung.

Bei den Rechnersystemen 22, 24 kann die Anmeldung - in an sich ebenfalls bekannter Weise - durch Eingabe einer persönlichen a-Mail-Adresse und eines Passwortes erfolgen.

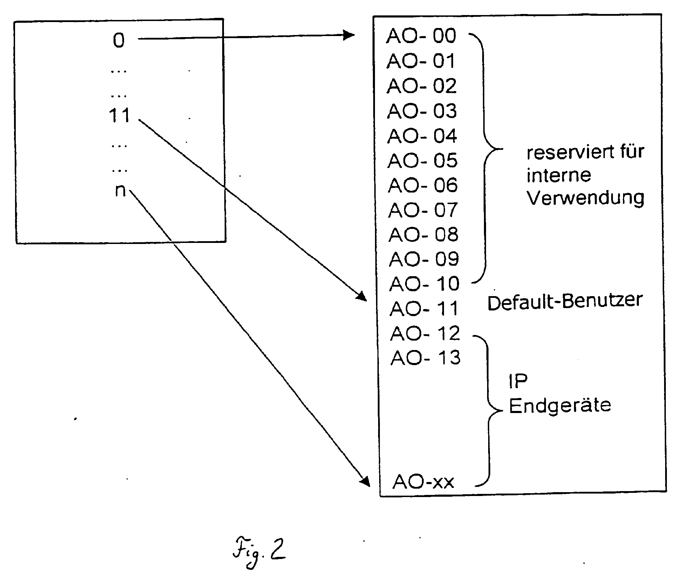

In der Fig. 2 ist schematisch die Zuordnung der Benutzerprofile im Vermittlungsknoten 12 (aus Fig. 1) mit Anschlüssen der Endgeräte gezeigt. Wie aus der Fig. 2 ersichtlich, werden in dem Vermittlungsknoten 12 n unterschiedliche Benutzerprofile der an der TK-Anlage zugelassenen Benutzer verwaltet. Von diesen n Benutzerprofilen sind die ersten elf, die den Anschlüssen AO-00 bis AO-10 zugeordnet sind, für eine lediglich Vermittlungsknoten-interne Verwendung reserviert. Ab dem dreizehnten Benutzerprofil können die Benutzerprofile der Mitarbeiter bestimmten Endgeräten bzw. Endgerät-Anschlüssen, AO-12 bis AO-xx, zugeordnet sein.

Aus dieser Zuordnung ist ersichtlich, dass der Vermittlungsknoten ein Minimalprofil - auch zu bezeichnen als Default-Benutzer - keinem bestimmten Endgerät zuordnet. Wenn ein Endgerät, an dem kein Benutzer angemeldet ist, dem Vermittlungsknoten ein Signal sendet, so nimmt der Vermittlungsknoten das Signal dennoch an und leitet es entsprechend weiter. Der Vermittlungsknoten 12 reagiert auf ein Endgerät ohne angemeldeten Benutzer so, als ob ein "Default-Benutzer" sich an diesem Endgerät angemeldet hätte. Ein von einem Endgerät mit Default-Benutzer initiierter Anruf im Rahmen des Minimalprofils wird vom Vermittlungsknoten folglich nicht abgewiesen.

Der Default-Benutzer, AO-11 in Fig. 2, wird als Zuordnung für alle an das System angeschlossenen Endgeräte verwendet. Der Vermittlungsknoten ist daher auch nicht in der Lage, an ein bestimmtes Endgerät mit einem Default-Benutzer eine Signalisierung aufzubauen. Die Möglichkeit der Zuordnung des Default-Benutzers an jeden Anschluss stellt sicher, dass die Signalisierung eines Endgerätes, an dem kein Benutzer gültig angemeldet ist, nicht vom dem Vermittlungsknoten abgewiesen wird, weil der Anruf von keinem am System zugelassenen Benutzer mit Benutzerkennung erfolgt.

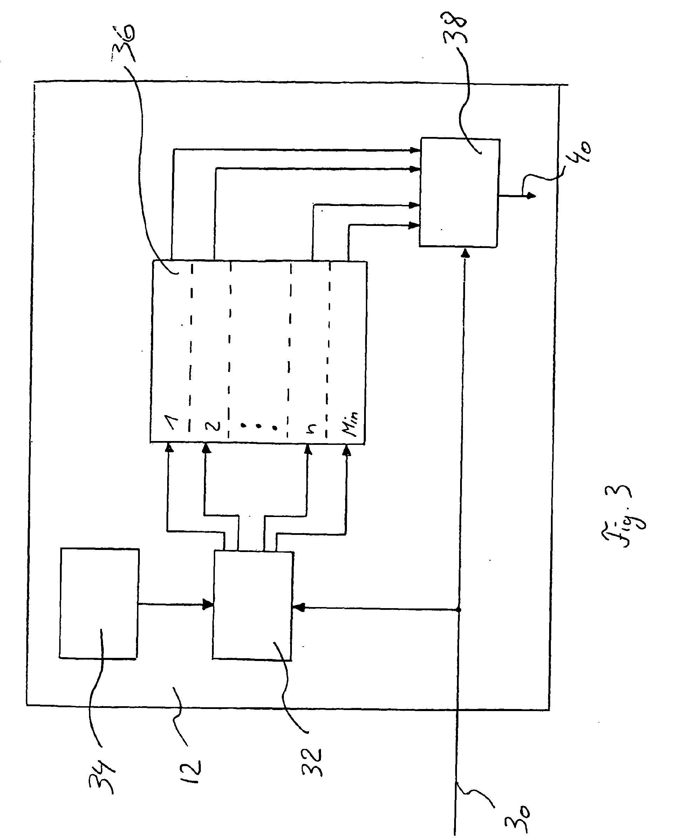

Fig. 3 zeigt ein schematisches Funktionsblockschaltbild der erfindungsrelevanten Abschnitte eines Vermittlungsknotens 12 für ein erfindungsgemäßes Betriebsverfahren. In der Fig. 3 ist dargestellt, dass der Vermittlungsknoten 12 eine Signalisierung 30 von einem Endgerät, beispielsweise von dem Telefon 14, empfängt.

Der Vermittlungsknoten 12 weist eine Verifizierungseinrichtung 32, einen Speicher 34 für Benutzerkennungen, einen Profilspeicher 36 und einen Vergleicher 38 auf. Der Profilspeicher 36 ist in eine Mehrzahl von Speicherbereichen 1 bis n aufgeteilt, die jeweils ein Benutzerprofil enthalten. Ferner ist ein zusätzlicher Speicherbereich Min vorgesehen, welcher das Minimalprofil enthält.

Die von dem Endgerät 14 kommende Signalisierung 30 wird an die Verifiziereinrichtung 32 und an den Vergleicher 38 geleitet. Die Signalisierung enthält sowohl Informationen über Absender und Zieladresse. Absender ist die Adresse des Endgerätes, von dem die Signalisierung gesendet wird. Zieladresse ist die Ruf- oder Durchwahlnummer, mit der der Benutzer an dem Absender-Endgerät eine Verbindung herstellen möchte.

Die Verifiziereinrichtung 32 vergleicht die Absenderadresse des Endgerätes 14 mit einer Zuordnung gemäß der Fig. 2, die in dem Speicher 34 für Benutzerkennungen gespeichert ist. Diese Zuordnung enthält alle gültigen Anmeldungen von Benutzern an den jeweiligen Endgeräten der TK-Anlage 10. Entsprechend der Zuordnung kann jedem angemeldeten Benutzer mit einer Benutzerkennung, dessen Benutzerprofil in dem Profilspeicher 36 abgelegt ist, ein Endgerät zugeordnet werden. Aufgrund dieser Zuordnung kann das entsprechende Benutzerprofil in dem Profilspeicher 36 adressiert werden.

Ist an dem Telefon 14 ein an der TK-Anlage 10 zugelassener Benutzer gültig angemeldet, wird aufgrund der Benutzerkennung das Benutzerprofil dieses Benutzers im Profilspeicher 36 adressiert. Das Benutzerprofil ist eines von den in den Speicherbereichen 1 bis n abgespeicherten Benutzerprofilen. Ist an dem Telefon kein Benutzer gültig angemeldet, kann aufgrund der Zuordnung im Speicher 34 keine Benutzerkennung dem Telefon 14 zugeordnet werden. In der erfindungsgemäßen TK-Anlage 10 wird dann für diese Signalisierung das Minimalprofil aus dem Speicherbereich Min des Profilspeichers 36 adressiert. Somit wird die Signalisierung nicht grundsätzlich abgewiesen. Das adressierte Benutzerprofil wird daraufhin dem Vergleicher 38 zur Verfügung gestellt.

Der Vergleicher 38 überprüft das Ziel der Signalisierung 30 anhand des adressierten und zur Verfügung gestellten Benutzerprofils aus dem Profilspeicher 36 daraufhin, ob der Benutzer die Berechtigung besitzt, dieses Ziel anzurufen. Das Ergebnis der Überprüfung wird als Nachricht 40 im Vermittlungsknoten weiterverarbeitet. Ist das Ergebnis positiv, stellt der Vermittlungsknoten die angeforderte Verbindung her. Ist das Ergebnis negativ, wird die Signalisierung mit der Rufanforderung abgewiesen. An das Telefon 14 kann dann eine akustische Nachricht, beispielsweise eine bestimmte Tonfolge oder eine standardisierte Textmeldung mit dem Inhalt gesendet werden, dass die von dem Benutzer gewünschte Rufnummer nicht angerufen werden kann.

Die Abweisung der Signalisierung 30 erfolgt erfindungsgemäß nicht aufgrund der Überprüfung, ob ein zugelassener Benutzer an der TK-Anlage gültig angemeldet ist, sondern aufgrund der Überprüfung, ob das gewünschte Ziel sich innerhalb des Rahmens befindet, der durch das adressierte Benutzerprofil definiert und vorgegeben ist. Dadurch ist die eingeschränkte Benutzung der TK-Anlage auch für Benutzer sichergestellt, die keine Benutzerkennung besitzen oder keine Zeit für die Durchführung einer Anmeldeprozedur haben.

Das Minimalprofil ist z.B. derart eingerichtet, das mit dem Telefon 14 eine Zentrale innerhalb des Unternehmens angerufen werden kann. Ferner ist es denkbar, dass grundsätzlich die öffentliche Notrufnummer, beispielsweise 112 für Deutschland, mit dem Telefon 14 erreichbar ist. Die Einrichtung und die Vergabe der Berechtigungen für das Minimalprofil erfolgt mittels eines oder mehrerer Administrationsprogramme an einem Bedienterminal (nicht dargestellt), das dem Vermittlungsknoten 12 zugeordnet ist. Der Systemadministrator vergibt an dieser zentralen Stelle in der TK-Anlage 10 die einzelnen Berechtigungen für die minimale Benutzung der im System verteilten Endgeräte.

Die Berechtigungen können abhängig von der spezifischen Bauart des Endgerätes sein. So wird beispielsweise ein Telefon die Berechtigung erhalten, einen bestimmten Nummernvorrat anzuwählen. Dazu kann sinnvollerweise die Telefonzentrale bzw. der Empfang des Unternehmens gehören. Ein Rechnersystem hingegen kann, wenn es für Telekommunikation mittels VoIP ausgestattet ist, ebenfalls die Berechtigung zum Anrufen dieser zentralen Rufnummer erhalten. Zusätzlich kann das Rechnersystem die Berechtigung zur Absendung einer Textmeldung, beispielsweise firmeninternes Email, erhalten. Rechnersysteme ohne Einrichtung für Telekommunikation werden über den Weg einer Textmeldung der Zentrale eine Nachricht zukommen lassen.

Sämtliche in den Anmeldungsunterlagen offenbarte Merkmale werden als erfindungswesentlich beansprucht, soweit sie einzeln oder in Kombination gegenüber dem Stand der Technik neu sind.

## Patentansprüche

1. Betriebsverfahren in einer TK-Anlage (10), an die über ein LAN unter Nutzung des Internet-Protokolls eine Mehrzahl von Endgeräten (14, 16, 18, 20, 22, 24) angeschlossen ist, wobei die Herstellung einer Verbindung von einem Endgerät oder die Bereitstellung eines Leistungsmerkmals an dem Endgerät im Ansprechen auf ein positives Ergebnis einer Überprüfung eines Benutzerprofils erfolgt, das vor einer Benutzung dem Endgerät durch Eingabe einer Benutzerkennung zugeordnet wurde, **dadurch gekennzeichnet, dass**
im Ansprechen auf eine von einem Endgerät, an dem kein Benutzer gültig angemeldet ist, ausgehende Signalisierung ausgewählte Verbindungen hergestellt und/oder Leistungsmerkmale bereitgestellt werden können, die in einem vorgespeicherten Default-Benutzerprofil definiert sind.

2. Verfahren nach Anspruch 1, **dadurch gekennzeichnet, dass** das Default-Benutzerprofil automatisch für ein Endgerät (14, 16, 18, 20, 22, 24) bereitgestellt wird, sobald dieses an die TK-Anlage (10) angeschlossen wird.

3. Verfahren nach Anspruch 1 oder 2, **dadurch gekennzeichnet, dass** an das Endgerät (14, 16, 18, 20, 22, 24) eine Nachricht gesendet wird, dass die angeforderte Verbindung und/oder das angeforderte Leistungsmerkmal nicht her- bzw. bereitgestellt wird, wenn diese nicht von dem Benutzerprofil bzw. dem Default-Benutzerprofil umfasst ist.

4. Verfahren nach einem der vorstehenden Ansprüche, **dadurch gekennzeichnet, dass**
das Default-Benutzerprofil mittels eines oder mehrerer Administrationsprogramme in einem Vermittlungsknoten (12) eingerichtet wird.

5. TK-Anlage (10) zur Anwendung des Verfahrens nach einem der Ansprüche 1 bis 4, an die über ein LAN unter Nutzung des Internet-Protokolls eine Mehrzahl von Endgeräten (14, 16, 18, 20, 22, 24) angeschlossen ist, mit einem Vermittlungsknoten (12), der einen Profilspeicher (36) für eine Mehrzahl von Benutzerprofilen aufweist, dessen Speicherbereiche (1 - n) jeweils über eine Benutzerkennung adressierbar sind, **dadurch gekennzeichnet, dass**
der Profilspeicher (36) einen zusätzlichen Speicherbereich (Min) aufweist, in dem ein Default-Benutzerprofil gespeichert ist und der immer dann adressiert wird, wenn der Vermittlungsknoten (12) eine Signalisierung von einem Endgerät (14, 16, 18, 20, 22, 24) ohne zugeordnetes Benutzerprofil empfängt.

6. TK-Anlage (10) nach Anspruch 5, **gekennzeichnet durch** einen Speicher (34), in dem eine Zuordnung zwischen den Benutzerkennungen, einschliesslich einer Benutzererkennung "Default-Benutzer", und den Endgeräten (14, 16, 18, 20, 22, 24) abgespeichert ist, an denen Benutzer gültig angemeldet oder nicht angemeldet sind, und
eine Verifiziereinrichtung (32), die anhand der Zuordnung im Speicher (34) eine empfangene Signalisierung (30) einem Benutzerprofil zuordnet.

7. TK-Anlage (10) nach Anspruch 5 oder 6, **gekennzeichnet durch** einen Vergleicher (38), der anhand des adressierten Benutzerprofils aus dem Profilspeicher (36), einschliesslich des Default-Benutzerprofils (Min), überprüft, ob die Signalisierung (30) ein Rufziel oder Leistungsmerkmal bezeichnet, das von diesem Benutzerprofil umfasst wird.

8. TK-Anlage (10) nach einem der Ansprüche 5 bis 7, **gekennzeichnet durch** Unterstützung des H.323-Standards für die Datenübertragung zwischen einem Endgerät (14, 16, 18, 20, 22, 24) und dem Vermittlungsknoten (12).

## Claims

1. Method of operation in a telecommunications system (10) to which a plurality of terminals (14, 16, 18, 20, 22, 24) is connected via a local area network (LAN) using the internet protocol, a connection from a terminal being established or a performance feature being provided to the terminal in response to positive verification of a user profile which have been assigned by entering a username prior to using the terminal, **characterised in that**, in response to an outgoing signal from a terminal into which no user is validly logged, selected connections can be established and/or performance features can be provided which are defined in a stored default user profile.

2. Method according to claim 1, **characterised in that** the default user profile is automatically provided for a terminal (14, 16, 18, 20, 22, 24) when it is connected to the telecommunications system (10).

3. Method according to either claim 1 or claim 2, **characterised in that** a message is sent to the terminal (14, 16, 18, 20, 22, 24) that the requested connection and/or the requested performance feature are not established or provided if this is not included in the user profile or the default user profile.

4. Method according to any of the preceding claims, **characterised in that** the default user profile is set up in a switching node (12) by means of one or more administration programs.

5. Telecommunications system (10) for use of the method according to any of claims 1 to 4, to which system a plurality of terminals (14, 16, 18, 20, 22, 24) is connected via a local area network (LAN) using the internet protocol, comprising a switching node (12) which has a profile memory (36) for a plurality of user profiles, the memory regions of which (1 - n) can each be addressed via a username, **characterised in that** the profile memory (36) comprises an additional memory region (Min) in which a default user profile is stored and which is always addressed whenever the switching node (12) receives a signal from a terminal (14, 16, 18, 20, 22, 24) having no assigned user profile.

6. Telecommunications system (10) according to claim 5, **characterised by** a memory (34) in which an assignment between the usernames, including a username "default user", and the terminals (14, 16, 18, 20, 22, 24) is stored, into which terminals users are validly logged in or not logged, and a verification means (32) which assigns a received signal (30) to a user profile using the assignment in the memory (34).

7. Telecommunications system (10) according to either claim 5 or claim 6, **characterised by** a comparator (38) which verifies, by means of the addressed user profile from the profile memory (36), including the default user profile (Min) whether the signal (30) indicates a call destination or performance feature that is included in this user profile.

8. Telecommunications system (10) according to any of claims 5 to 7, **characterised by** support from the H.323 standard for data transfer between a terminal (14, 16, 18, 20, 22, 24) and the switching node (12).

## Revendications

1. Procédé de fonctionnement dans une installation de télécommunication (10) à laquelle une multiplicité de terminaux (14, 16, 18, 20, 22, 24) est raccordée par le biais d'un réseau local avec utilisation du protocole Internet, l'établissement d'une liaison d'un terminal ou la mise à disposition d'une fonctionnalité sur le terminal s'effectuant en réaction à un résultat positif d'un contrôle d'un profil d'utilisateur qui a été affecté au terminal, avant une utilisation, par l'entrée d'un identifiant d'utilisateur, **caractérisé en ce que**,
en réaction à une signalisation en provenance d'un terminal sur lequel aucun utilisateur n'est inscrit de façon valable, des liaisons sélectionnées peuvent être établies et/ou des fonctionnalités peuvent être mises à disposition, qui sont défini(e)s dans un profil d'utilisateur par défaut préenregistré.

2. Procédé selon la revendication 1, **caractérisé en ce que**
le profil d'utilisateur par défaut est mis à disposition automatiquement pour un terminal (14, 16, 18, 20, 22, 24) dès que ce dernier est raccordé à l'installation de télécommunication (10).

3. Procédé selon la revendication 1 ou 2, **caractérisé en ce**
**qu'**un message est envoyé au terminal (14, 16, 18, 20, 22, 24), en ce que la liaison demandée et/ou la fonctionnalité demandée n'est pas établie ou respectivement mise à disposition quand celui-ci n'est pas compris par le profil d'utilisateur ou respectivement par le profil d'utilisateur par défaut.

4. Procédé selon une des revendications précédentes, **caractérisé en ce que**
le profil d'utilisateur par défaut est établi dans un noeud de commutation (12) au moyen d'un ou de plusieurs programmes d'administration.

5. Installation de télécommunication (10) pour l'utilisation du procédé selon une des revendications 1 à 4, à laquelle une multiplicité de terminaux (14, 16, 18, 20, 22, 24) est raccordée par le biais d'un réseau local avec utilisation du protocole Internet, avec un noeud de commutation (12) qui présente une mémoire de profils (36) pour une multiplicité de profils d'utilisateur dont les zones de mémoire (1 - n) sont adressables respectivement par le biais d'un identifiant d'utilisateur, **caractérisée en ce que**
la mémoire de profils (36) présente une zone de mémoire (Min) supplémentaire dans laquelle est enregistré un profil d'utilisateur par défaut et qui est adressée à chaque fois que le noeud de commutation (12) reçoit une signalisation d'un terminal (14, 16, 18, 20, 22, 24) sans profil d'utilisateur affecté.

6. Installation de télécommunication (10) selon la revendication 5, **caractérisée par**
une mémoire (34) dans laquelle est enregistrée une affectation entre les identifiants d'utilisateur, y compris un identifiant d'utilisateur « utilisateur par défaut », et les terminaux (14, 16, 18, 20, 22, 24) sur lesquels des utilisateurs sont inscrits de façon valide ou ne sont pas inscrits, et
un équipement de vérification (32) qui, à l'aide de l'affectation dans la mémoire (34), affecte une signalisation (30) reçue à un profil d'utilisateur.

7. Installation de télécommunication (10) selon la revendication 5 ou 6, **caractérisée par** un comparateur (38) qui, à l'aide du profil d'utilisateur adressé issu de la mémoire de profils (36), y compris du profil d'utilisateur par défaut (Min), vérifie si la signalisation (30) désigne une cible d'appel ou une fonctionnalité qui est comprise par ce profil d'utilisateur.

8. Installation de télécommunication (10) selon une des revendications 5 à 7, **caractérisée par** l'assistance du standard H.323 pour la transmission de données entre un terminal (14, 16, 18, 20, 22, 24) et le noeud de commutation (12).
